Europäisches Patentamt

European Patent Office

Office européen des brevets

(11) Publication number: **0 632 360 A1**

## EUROPEAN PATENT APPLICATION

(21) Application number: 94304457.8

(22) Date of filing: 20.06.94

(51) Int. Cl.⁶: **G06F 1/32**

(30) Priority: **29.06.93 US 84688**

(43) Date of publication of application:
**04.01.95 Bulletin 95/01**

(84) Designated Contracting States:
**DE FR GB**

(71) Applicant: **XEROX CORPORATION**
**Xerox Square**
**Rochester**
**New York 14644 (US)**

(72) Inventor: **Weiser, Mark D.**
**1144 Greenwood Avenue**
**Palo Alto,**
**California 94301 (US)**
Inventor: **Wood, David A.**
**2115 Bascom Street**
**Madison,**
**Wisconsin 53705 (US)**
Inventor: **Demers, Alan J.**
**720 Hopkins Gulch**
**Boulder Creek,**
**California 95006 (US)**
Inventor: **Atkinson, Russell R.**
**3223 Redwood Drive**
**Aptos,**
**California 95003 (US)**

(74) Representative: **Reynolds, Julian David et al**
**Rank Xerox Ltd**
**Patent Department**
**Parkway**
**Marlow**
**Buckinghamshire SL7 1YL (GB)**

(54) Reducing computer power consumption by dynamic voltage and frequency variation.

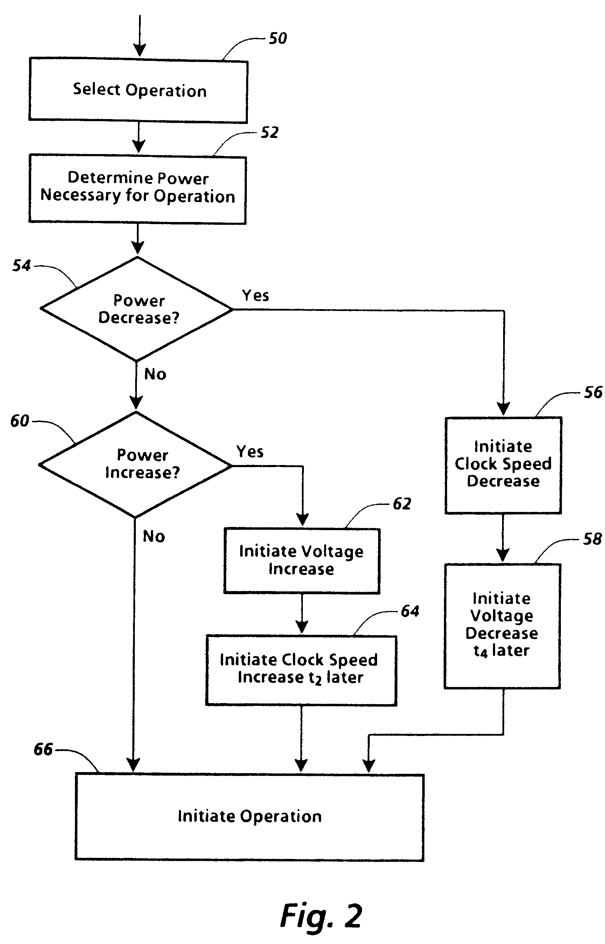

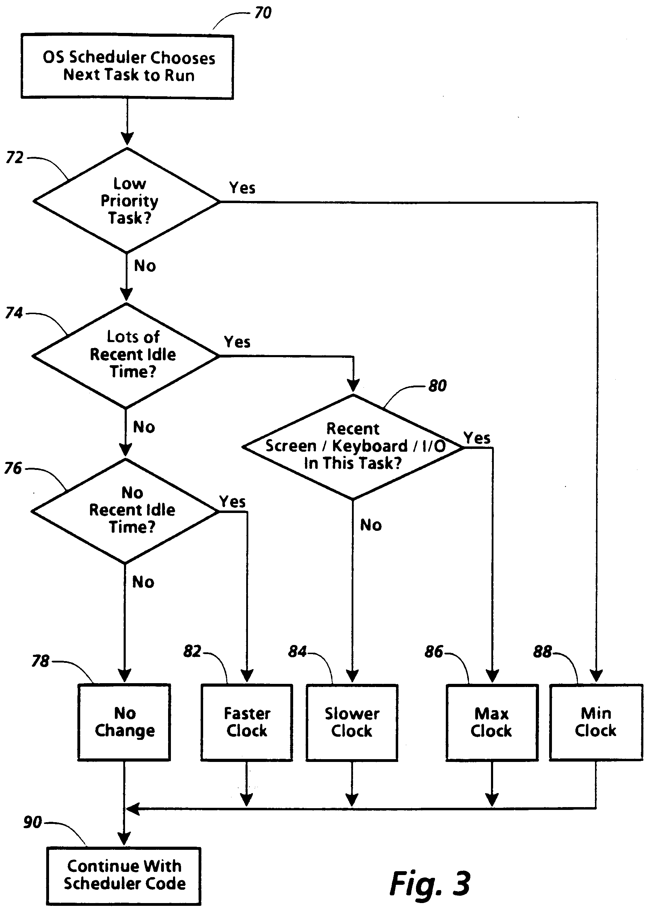

(57) A method for dynamically varying the power consumption of computer circuits (20) under program control. A power control subsystem (22) determines the minimum required level of power (52;Fig. 2) based on a number of factors (Fig. 3) including the particular operation and the recent amount of idle time of the circuit. Voltage (42) and clock speed (38) are determined for the circuit (20) to provide the minimum level of power. The system (22) for controlling the power consumption of the computer circuit (20) comprises a power control subsystem (22) for determining the power level (24), a sequencer (26) for controlling the change in voltage and clock speed, a variable voltage source (40), and a variable clock source (36).

Fig. 1

The present invention relates to the reduction of power consumption in computers. More specifically, the invention relates to techniques for reducing the power consumption in computers by dynamically varying the voltage and frequency of computer systems under program control.

In computer systems, and especially in portable computer systems, power consumption is an important consideration. Conservation of power extends the period of time that portable computing devices are able to operate effectively from an internal battery when the computer is disconnected from an external power source. Among users of the portable computers there is a need for the same or more computational capability as found in desktop machines placed in a low-power environment.

Power dissipation in "well-designed" CMOS circuits is dominated by the switching component, which may be approximated by the formula

$$P = f^*C^*V_{dd}^2,$$

where $f$ is the clock frequency, $C$ is the average effective capacitance being switched at each clock cycle, and $V_{dd}$ is the supply voltage. Thus, the task of reducing power needs becomes that of minimizing $f$ , $C,$ and $V_{dd}$, while retaining the required functionality. Since the maximum frequency decreases in roughly linear proportion to $V_{dd}$, it can be approximated it by the formula

$$f = k^*V_{dd},$$

where $k$ is a constant factor. Thus, lowering the voltage from 5 volts to 2 volts, by a factor of 2.5, offers a possible fifteen fold reduction in power $(2.5^*5^2/2^2)$ while similarly slowing the maximum operating frequency of the computer by only a factor of about two and a half. Many integrated circuit (IC) manufacturers sell chips that operate over a range of supply voltages. In some cases, chips have simply been recharacterized, and work unchanged for different voltage modes. Some systems achieve a reduction in power consumption by running at a constant lower voltage However, running at a continuously lowered voltage can result in poorer performance, which may be unacceptable to the user.

Other low power computer systems vary their clock rate to conserve power. Varying the clock rate alone gives a linear decrease in power usage. For static ICs that can actually stop their clock altogether when they are not busy, however, there is little advantage in slowing the clock over simply running the clock as fast as possible when there is work, and stopping it completely when there is no work.

US-A-5,167,024 describes a power management method for a portable computer which controls various units within the computer through transistor switches which control the distribution of power by deactivating clock signals to the various units within the computer when they are not in use, removing the supply voltage from a device until usage is requested, or decreasing the frequency of clock signals for a "slow mode", providing a 25-30% power saving.

Some applications require real-time operation. Radio modem, speech and video compression, and speech recognition operations may require computation at near-peak rates. However, once the real-time requirements of the applications are met, there may be no real advantage in increasing the computational throughput.

It is an object of the invention to reduce the power consumption in a computer system by dynamically reducing both voltage and clock speed without significantly affecting the user's perception of performance.

It is a further object of the Invention to reduce power consumption by dynamically reducing voltage and clock speed to a computer system or portions of a computer system under program control.

The present invention describes a method for reducing the power consumption of an electrical circuit by determining a task to be performed, determining the lowest level of power needed to perform the task, and determining the voltage and clock speed necessary to run at that power level. The clock speed and supply voltage are set to the determined levels and the task is performed.

The method may further be performed by determining the lowest acceptable voltage for the task to be performed and the clock speed necessary to run at that voltage, or by determining the minimum clock speed needed to complete the task and the voltage needed to support that clock speed. The clock speed and supply voltage are set to the determined levels and the task is performed.

The invention further provides a method for dynamically adjusting the power consumption of an electrical circuit for performing a second task, the circuit comprising a supply voltage source and a clock source and set at a first power level for performing a first task, the method comprising: determining the second task to be performed by the electrical circuit; determining a second power level necessary to perform the second task; determining a change in voltage to provide the determined second power level; determining a change in clock speed to provide the determined second power level; changing the supply voltage to the electrical circuit according to said determined change in voltage; changing the clock source according to said determined change in clock speed; and performing the second task.

In another aspect of the invention, a method for determining the power level is performed by determining the amount of recent idle time in the circuit. The power level is chosen based on the amount of recent idle time, and voltage and clock speed are adjusted to provide that power level to perform the task.

In the present system, power consumption is reduced by dynamically varying the voltage under program control. An IC or computer subsystem running at a lower voltage also requires a lower clock rate, since it cannot switch as quickly The operating system software of the computer determines the appropriate power level for the task being run at a given time, lowering the voltage and clock speed for tasks that can take longer to run.

Running the whole computer at a low voltage or speed all the time has the problem that it may not be fast enough for some tasks. Dynamically varying the voltage and speed under operating system control means the CPU can be fast when needed and power conservative at other times, depending on the task to be performed.

Embodiments of the invention will now be described, by way of example, with reference to the accompanying drawings, in which:

Fig. 1 shows a block diagram of the system of the invention;

Fig. 2 describes a general method for performing power level selection for the system of Fig. 1;

Fig 3 describes a method for determining necessary power requirements;

Fig. 4 describes the timing implemented in the sequencer;

Fig. 5 shows a block diagram of the sequencer of Fig. 1;

Fig. 6 shows a more detailed block diagram of the delay circuit for the sequencer of Fig. 5;

Fig. 7 shows a block diagram of the variable clock source of the system of Fig. 1; and

Fig. 8 shows a block diagram of the variable voltage source of the system of Fig. 1.

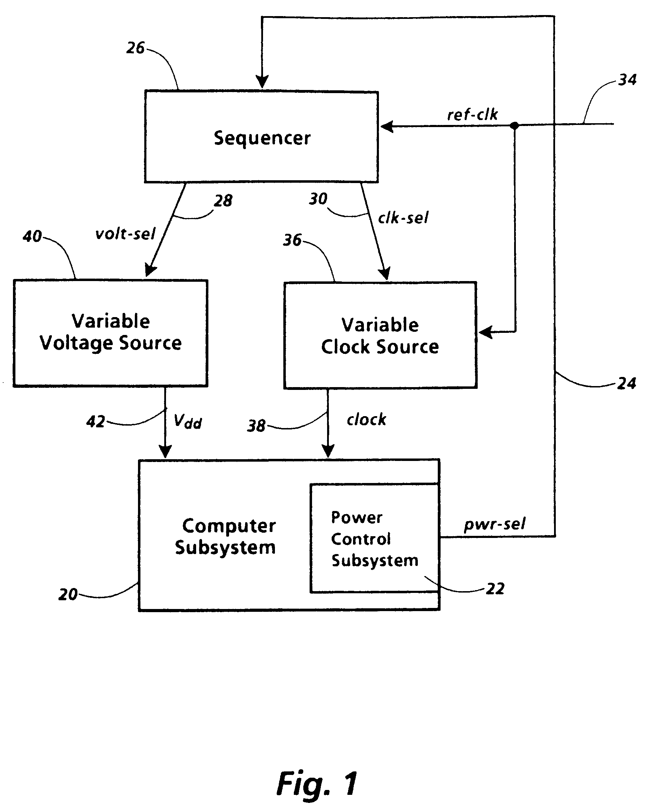

Fig. 1 shows a block diagram for general system 10. The system is based on a general computer system 20. For the purposes of the description here, computer system 20 may be an integrated circuit (IC), a computer board, some subsystem, or a computer itself. Further, in a computer there may be several of these systems, each controlling different parts of a system

A portion of computer system 20 comprises a power control subsystem 22, which performs calculations to determine the power level needed to run an operation of computer system 20 This desired power level is provided to sequencer 26 by a power select signal *pwr−sel* 24. Although for illustrative purposes *pwr−sel* 24 is shown and described in this figure in terms of a single signal, it will be obvious that *pwr−sel* could be a number of lines *n* describing a desired power level.

Sequencer 26 selects the clock speeds and voltage values that achieve the desired power level. The voltage is required at all times to be greater than or equal to the minimum voltage for the current clock speed. Thus, if the clock speed is being reduced, the voltage must be lowered later than the clock, but if the clock speed is being increased, the voltage needs to be raised in advance of the clock.

Variable clock source 36 is provided with a reference frequency *ref−clk* signal 34. This clock may come from the computer or a dedicated or external source. *clk−sel* signal 30 provides the desired clock speed to variable clock source 36. Although for illustrative purposes *clk−sel* signal 30 is shown and described in this figure in terms of a single signal, it will be obvious that *clk−sel* could be a number of signals *m* describing a desired clock speed. The output of variable clock source 36, *clock* signal 38, is provided to computer system 20 to perform the desired operation.

Variable voltage source 40 is provided a voltage select *volt−sel* signal 28 Although for illustrative purposes *volt−sel* signal 30 is shown and described in this figure in terms of a single signal, it will be obvious that *volt−sel* could be a number of signals *p* describing a desired voltage level. The selected voltage $V_{dd}$ 42 is provided to computer system 20 to perform the desired operation.

Fig. 2 describes a general overview of the present method for performing power level selection for system 10. These steps may be performed by a combination of the subsystems of system 10.

The step in box 50 finds the operation or task to be performed. The step in box 52 determines the minimum power requirements to perform the operation at an acceptable performance level. There are many ways by which a lower power consumption rate might be chosen. Some tasks may be labeled "background" or not time critical. A mail delivery process, for example, must eventually complete, but it can afford to take longer without significantly affecting the user's perception of the performance of the machine. Some tasks have a scheduled time to complete, and have a very predictable performance. Such a task might have the clock slowed so that the task completes exactly on time, within its margin of performance prediction, and no sooner. The appropriate voltage would be derived from the calculated clock value. Tasks may be relabeled with different priorities, with the voltage and clock rate determined based on their priority User interactive tasks might have a high priority, work that requires less interaction a medium priority, and work that is permitted to go slowly a background priority.

Voltage could also be lowered in a portable computer when the battery life is low, thus permitting a user to continue useful work but at a reduced speed. This might be an acceptable tradeoff for a user who could otherwise do nothing at all Or the user might be given control over the tasks, for instance, by having a "speed bar" on each window which could be varied by the user to control the speed of activities of the tasks in that window, so that activities that are allowed to run more slowly will consume less power.

For each chip or subsystem, the minimum and maximum voltages at which the chip will run must be characterized, and an appropriate clock level for each voltage chosen. Some chips which have already been characterized by their manufacturer from 3.3V to 5V, for example, may have a clock speed specified for each of 3.3V and 5V, but not for voltages in between. These values could be determined experimentally, or experimentation may be reduced by choosing a conservative clock speed.

The step in box 54 determines if the new power requirement is a decreased level from the previous power level If so, the step in box 56 initiates a reduction in the clock speed, and the step in box 58, after a delay period, initiates a decrease in the voltage. Note that this delay can be omitted for some circuits. Then the step in box 66 initiates the operation. In the figure, the reduction in clock speed and voltage are initiated, but may not complete before the operation itself is initiated. The operation may also be initiated before both steps 56 and 58 have been performed. Thus the clock and voltage adjustment may be performed in parallel with the operation. The operation may run slower later in its process than at the beginning due to this slowdown. In systems or operations where this may cause timing problems, the operation may not be initiated until a sufficient time has passed for the clock and voltage to reach the desired level.

If the new power requirement is not a decrease from the previous level, the step in box 60 checks for an increase in power required. If no increase is required, the operation simply begins in the step in box 66. If an increase in power is necessary, the step in box 62 initiates an increase in the voltage. After a delay period sufficient for the voltage increase to have taken effect throughout the computer system, the step in box 64 initiates an increase in the clock speed. The operation is initiated in the step in box 66. Again, the increase in voltage and clock speed are initiated, but may not complete before the operation itself is initiated, and the operation may be performed in parallel with the voltage and clock speed increase. In systems or operations where increasing the speed of the operation during its performance may cause timing problems, the operation may not be initiated until a sufficient time has passed for the clock and voltage to reach the desired level.

The flowchart of Fig 3 describes an example method that could be used to determine the necessary power requirements as described in step 52. It is essentially a test for a number of conditions. Other conditions could easily be added. This code may be simply added to an operating system since it does not interfere with the task scheduling activity and it can be executed quickly. In the step in box 70, the operating system scheduler chooses the next job or task to run. The step in box 72 determines the priority of the task. If it is a low priority task, the minimum clock speed may be chosen by the step in box 88.

If the current task is not low priority, the step in box 74 determines if there has been a large proportion of idle time recently For example, if the system is running so fast that it completes all it operations and still has a great deal of idle time, then perhaps the system might be run slower and at a lower voltage, in order to optimize the power consumption. This proportion may be set by the user or the system designer, and may vary according to the perceived speed and/or operational needs of the system.

If there has been a lot of recent idle time, the step in box 80 determines if screen or keyboard I/O operations are necessary for this task. To perform screen or keyboard I/O operations, the step in box 86 may set the clock to the maximum clock speed, and correspondingly set the voltage level to the maximum voltage. If there are no screen or keyboard I/O operations in the current task, however, the step in box 84 will reduce the clock speed and the voltage. This should reduce the amount of idle time while reducing the power consumption.

In most instances, the voltage and clock speed should be lowered if there is too much idle time. Checking for a screen or I/O operation is shown in the method above to be an exception to lowering the clock speed, since these operations generally require a faster or maximum speed. However, in some systems it may be necessary to always increase the clock speed to the maximum for screen or keyboard or other I/O operations, rather than just when there has been recent idle time, to prevent effects on the performance of the system. This would require the test in box 80 to be performed earlier, perhaps before the steps in boxes 74 or 72.

If there has not been a great deal of recent idle time, the step in box 76 determines if there has been no recent idle time For example, if the system is running at such a slow speed that it is running constantly, the performance of the system may suffer. If there has been no recent idle time, the step in box 82 increases the clock to a faster clock speed, with a corresponding increase in voltage If there has been some recent idle time, the step in box 78 determines that no change is needed in the clock speed and it remains at the current settings. The scheduler in the operating system is returned control in the step in box 90.

The average desired amount of idle time to provide the optimum power consumption and performance may be tuned to the particular system to allow the system to run as slowly as possible without significantly detrimentally affecting the user's perception of system performance. The steps in Fig. 3 may further be repeated during the operation of the task, adjusting the voltage and clock speed iteratively throughout the operation based on the amount of idle time during operation. This works particularly for tasks in which the parameters of the task are fairly stationary throughout operation.

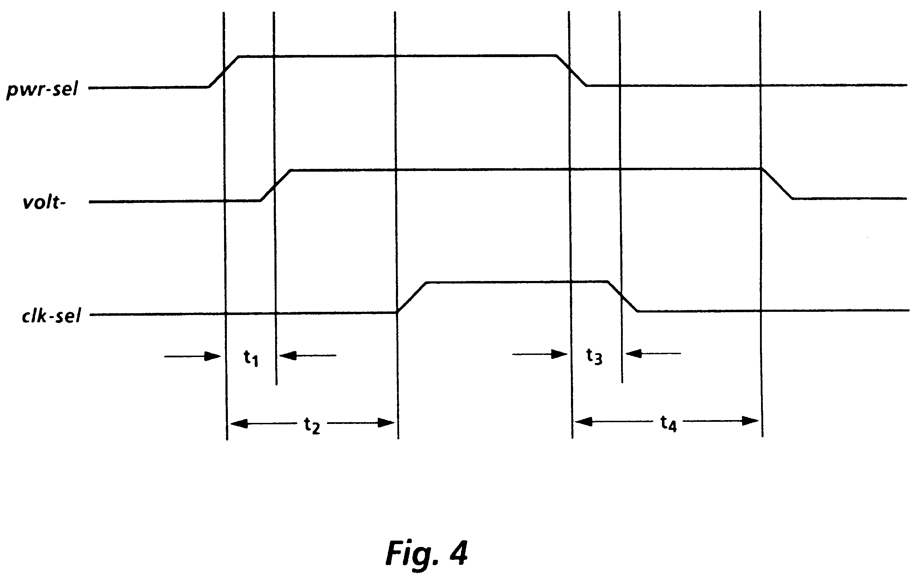

Fig. 4 describes the timing implemented in system 10 by sequencer 26. For example, when the $pwr-sel$ line indicates an increase in power, the $volt-sel$ line goes up $t_1$ later. The clock speed should not be raised until the voltage has reached a suitable level to support that clock speed, so $clk-sel$ is delayed $t_2$. When power is reduced, $clk-sel$ is reduced at $t_3$ after $pwr-sel$ is reduced. Since the voltage should not be reduced until the clock is slow enough to support a lower voltage, $volt-sel$ is delayed to $t_4$ later. Note that $t_2$ is likely to be much longer than $t_1$, $t_3$, and $t_4$. The delay values may be derived by experimentation, since manufacturers do not currently anticipate dynamically varying the voltage supply or specify such delays for chips. However, experimentation may be reduced by choosing a conservative value, say one millisecond, for the delay

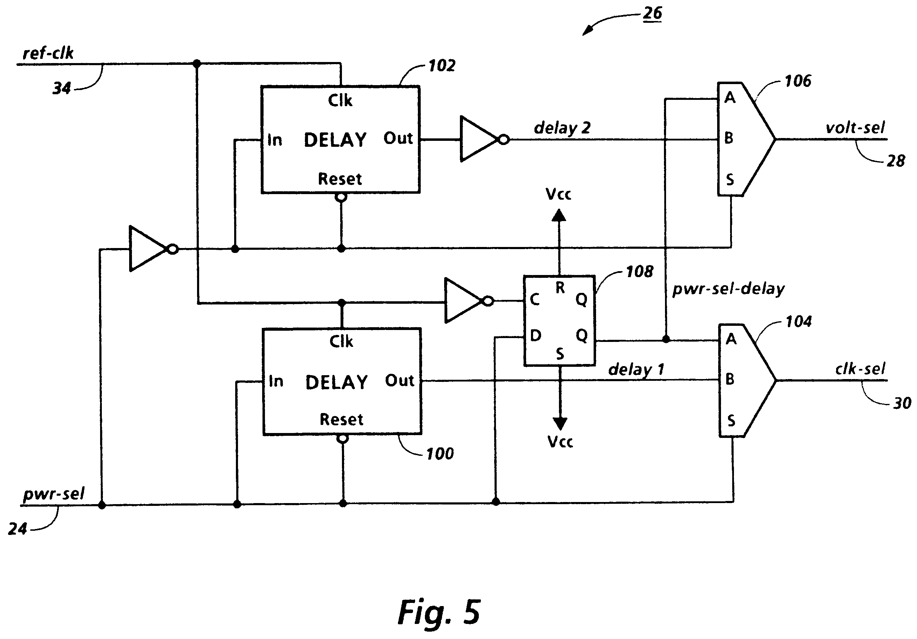

Figs. 5-8 describe block diagrams of circuits that may be used to create system 10 as shown in Fig. 1. For clarity, the circuitry is described herein in terms of two selectable clock speeds and two selectable voltage levels. However, it will be clear to one skilled in the art that the circuitry may be expanded to provide a greater number of both clock speeds and voltage levels.

A block diagram of sequencer 26 is shown in Fig 5. The signal $pwr-sel$ is input to a delay circuit 100 which is clocked by the $ref-clk$ line 34 The delayed output is input to a multiplexer 104. $ref-clk$ 34 is inverted and input to a D-flipflop 108 which is triggered by the $pwr-sel$ line 24. The output of the flipflop is a delayed $pwr-sel-delay$, which is input to the multiplexer This delayed power signal is triggered on the opposite clock edge from the delay units, so that the $clk-sel$ line does not cause a glitch on the $clock$ output line. $pwr-sel$ signal 24 is inverted and input into a second delay 102, the inverted output of which is input to a second multiplexer 106. The output of multiplexer 104 provides the clk-sel signal 30, and the output of multiplexer 106 provides the volt-sel signal 28.

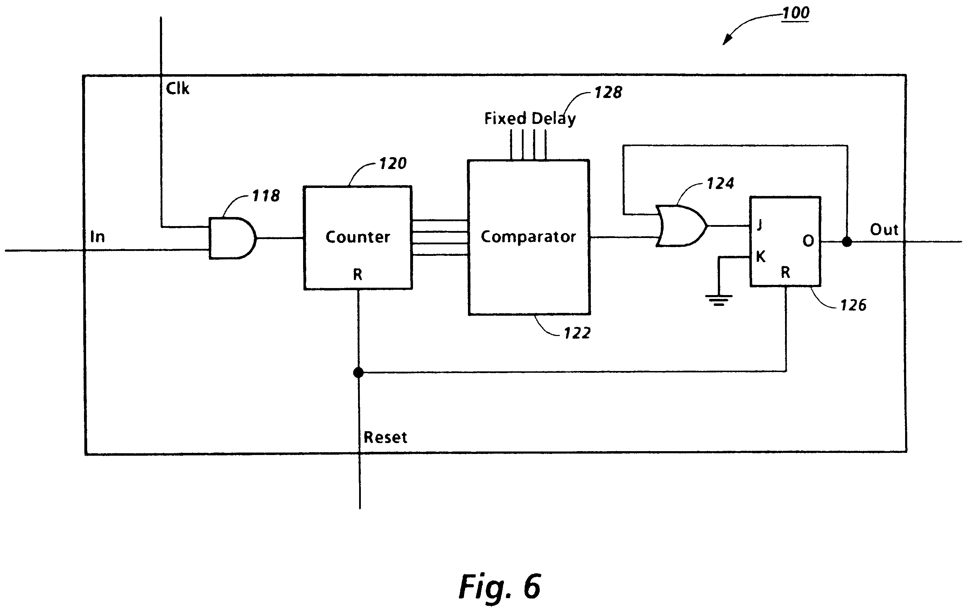

Fig. 6 describes delay circuit 100 or 102 of Fig. 5. The input (In) is coupled with the reference clock input (clk) at AND gate 118 A positive output from gate 118 begins a counter 120. The output of counter 120 is compared by comparator 122 with a fixed delay 128. When the counter has reached the delay value, the comparator output signal is ORed (at gate 124) with the output of flipflop 126, and the result is input to flipflop 126. Both the counter 120 and the flipflop 126 may be cleared by the reset line (Reset).

For more than one $pwr-sel$ line, delay circuit 100 may further have a decoder before gate 118.

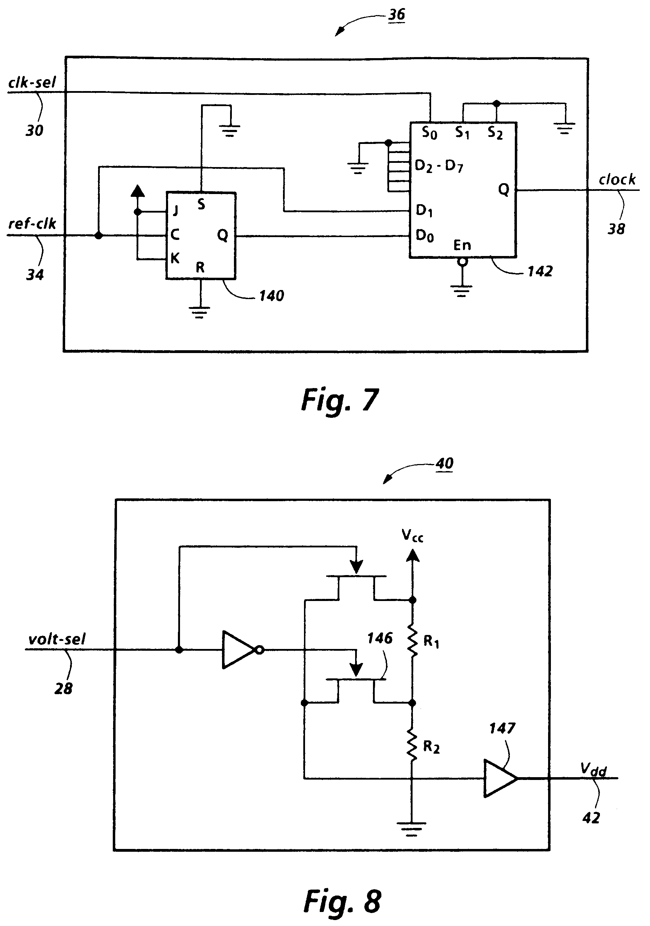

Fig. 7 shows a block diagram of a circuit that may be used for variable clock source 36. The signal $ref-clk$, which runs at the maximum clock speed of the system, is provided to a programmable frequency divider In this case, the frequency divider comprises a flipflop 140, which divides the clock source ref-clk, and a multiplexer 142 which isolates the frequency selected by $clk-sel$. There may be more than one $clk-sel$ line 30 and a plurality of clock frequencies, and it will be obvious that the clock source must be designed so as to avoid introducing glitches on the clock output.

Fig. 8 shows a block diagram of a circuit that may be used for variable voltage source 40. $volt-sel$ line 28 is input to the voltage source circuitry. $volt-sel$ may comprise several signals for indicating a desired voltage level, and may be input to a decoder. The appropriate lines of transistors in the feedback amplifier 147 are energized by $volt-sel$ to produce output $V_{dd}$. The voltage source 40 may also require a low-pass filter so that the voltage changes gradually across the subsystem This filter value may be determined experimentally for a system Experimentation may be reduced by adding a relatively large filter, which will cause the voltage to take longer to change.

Varying the clock to subsystems or ICs in a computer may mean that the CPU will either need to buffer its data for delivery for a different external clock rate, or entire systems will need to change the clock rate to match the CPU Multiple different clock rates within a computer system are not uncommon, and there are standard methods of moving data among parts of the system using different clocks. In this case the problem may be simplified, since the slowed CPU clock could still be synchronized with other clocks, running at an integral multiple or traction of the base rate. Performance enhancements, such as parallel processing circuitry or pipelining circuitry, may increase the performance of the system, and may be used in conjunction with the present invention.

**Claims**

1. A method for dynamically adjusting the power consumption of an electrical circuit (20), the circuit comprising a supply voltage source (40) and a clock source (36), the method comprising:
   determining (50) a task to be performed by the electrical circuit (20);
   determining (52) the required level of power to perform the task;
   determining a change in voltage to provide the determined level of power;
   determining a change in clock speed to provide the determined level of power;
   changing (62,58) the supply voltage to the electrical circuit according to said determined change in voltage;
   changing (64,56) the clock source according to said determined change in clock speed.

2. The method of claim 1, wherein (1) said step of determining a change in voltage (62) is performed before said step of determining a change in clock speed (64), or (2) said step of determining a change in clock speed (56) is performed before said step of determining a change in voltage (58).

3. The method of claim 1, further including the step of commencing performance of said task before completion of said supply voltage changing and said clock source changing steps.

4. A method for reducing the power consumption of an electrical circuit (20), comprising:
   determining (50) a task to be performed;
   determining (52) a lowest acceptable voltage for the task to be performed;
   determining (78-88) a clock speed of the circuit at said determined voltage;
   setting (56) the clock of said electrical circuit to said determined clock speed;
   setting (58) the supply voltage of said electrical circuit to said determined voltage.

5. The method of claim 5, wherein (1) if said determined voltage is less than an immediately previous voltage, said step of setting the clock is done before said step of setting the supply voltage, and (2) if said determined voltage is greater that an immediately previous voltage, said step of setting the supply voltage is done before said step of setting the clock.

6. A method for reducing the power consumption of an electrical circuit, comprising:
   determining (50) a task to be performed;
   determining (52) a lowest acceptable clock speed for the task to be performed;
   determining a voltage of the circuit for said determined clock speed;
   setting (56) the clock of said electrical circuit to said determined clock speed;
   setting (58) the supply voltage of said electrical circuit to said determined voltage.

7. A method for dynamically adjusting the power consumption of an electrical circuit (20) for performing a second task, the circuit comprising a supply voltage source (40) and a clock source (36) and set at a first power level for performing a first task, the method comprising:
   determining (50) the second task to be performed by the electrical circuit;
   determining (52) a second power level necessary to perform the second task;
   determining a change in voltage to provide the determined second power level;
   determining a change in clock speed to provide the determined second power level;
   changing (62) the supply voltage to the electrical circuit according to said determined change in voltage;
   changing (64) the clock source according to said determined change in clock speed.

8. The method of claim 9, wherein (1) if said determined change in voltage is negative, said step of changing the clock source is performed before said step of changing the supply voltage, and (2) if said determined change in voltage is positive, said step of changing the supply voltage is done before said step of changing the clock source.

9. A method for dynamically adjusting the power consumption of an electrical circuit (20), the circuit comprising a supply voltage source (40) and a clock source (36), the method comprising:
   determining a task to be performed by the electrical circuit;
   determining the amount of recent idle time of said circuit;
   determining a level of power for said task based on said amount of recent idle time;
   determining a change in voltage to provide said determined level of power;

determining a change in clock speed to provide said determined level of power;

changing the supply voltage to the electrical circuit according to said determined change in voltage;

changing the clock source according to said determined change in clock speed.

10. The method of claim 9, wherein the step of determining a level of power for said task is further based upon the priority of said task, and/or wherein the steps of determining the amount of recent idle time of said circuit, determining a level of power, determining a change in voltage, determining a change in clock speed, changing the supply voltage, and changing the clock source are performed repeatedly during operation of said task.

26

Sequencer

34

*ref-clk*

28 *volt-sel*  30 *clk-sel*

40

**Variable Voltage Source**

36

**Variable Clock Source**

24

42 $V_{dd}$  38 *clock*

**Computer Subsystem**

**Power Control Subsystem**

*pwr-sel*

20  22

**Fig. 1**

Fig. 2

70

```
┌─────────────────────┐
│  OS Scheduler Chooses│
│   Next Task to Run   │
└─────────────────────┘
```

72

Low Priority Task?
— Yes
— No

74

Lots of Recent Idle Time?
— Yes
— No

80

Recent Screen / Keyboard / I/O In This Task?
— Yes
— No

76

No Recent Idle Time?
— Yes
— No

78 — No Change

82 — Faster Clock

84 — Slower Clock

86 — Max Clock

88 — Min Clock

90

Continue With Scheduler Code

**Fig. 3**

*Fig. 4*

EP 0 632 360 A1

**Fig. 5**

EP 0 632 360 A1

Fig. 6

EP 0 632 360 A1

**Fig. 7**

**Fig. 8**

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP-A-0 539 884 (TOSHIBA)<br>* column 1, line 33 - column 3, line 29 *<br>* column 4, line 1 - column 5, line 12 * | 1,2,7 | G06F1/32 |
| Y | | 4-6,8-10 | |
| X | WO-A-91 00564 (POQET COMPUTER)<br>* page 2, line 8 - page 5, line 2 * | 1,2,4-6 | |
| X | PATENT ABSTRACTS OF JAPAN<br>vol. 9, no. 127 (P-360)31 May 1985<br>& JP-A-60 010 318 (SANYO) 19 January 1985<br>* abstract * | 1,7 | |
| A | | 4,6,7 | |
| Y | ELECTRONIC COMPONENTS AND APPLICATIONS<br>vol. 7, no. 3 , 1986 , EINDHOVEN NL<br>pages 179 - 186<br>CROES R. 'Battery backup of HCMOS logic ICs'<br>* page 181, left column, line 15 - line 21 * | 4-6 | |
| | | | TECHNICAL FIELDS SEARCHED (Int.Cl.6) |
| Y | MOTOROLA TECHNICAL DEVELOPMENTS<br>vol. 14 , December 1991 , SCHAUMBURG, ILLINOIS US<br>pages 53 - 54 XP276157<br>SCHULTZ C. P. 'DYNAMIC CLOCK CONTROL FOR MICROPROCESSOR SYSTEM ENERGY MANAGEMENT'<br>* page 53, left column, line 1 - line 20 * | 8-10 | G06F |
| A | MOTOROLA TECHNICAL DEVELOPMENTS<br>vol. 15 , May 1992 , SCHAUMBURG, ILLINOIS US<br>pages 43 - 44 XP306138<br>YOUNG R. ET AL 'ADDPTIVE CLOCK SPEED CONTROL FOR VARIABLE PROCESSOR LOADING'<br>* the whole document * | 1,4,7,9 | |

The present search report has been drawn up for all claims

| Place of search | Date of completion of the search | Examiner |
|---|---|---|
| THE HAGUE | 12 October 1994 | Bailas, A |

EPO FORM 1503 03.82 (P04C01)